# EUROPÄISCHE PATENTSCHRIFT

(11) **EP 2 620 894 B1**
(45) Veröffentlichungstag und Bekanntmachung des Hinweises auf die Patenterteilung: **08.01.2014**
(21) Anmeldenummer: 12152716.2
(22) Anmeldetag: 26.01.2012
(51) Int. Cl.: G06K 7/10

(54) **Optoelektronischer Sensor und Verfahren zur Erfassung von Objektinformationen**
Optoelectronic sensor and method for recording object information
Capteur optoélectronique et procédé de détection d'informations d'objets

(43) Veröffentlichungstag der Anmeldung: 31.07.2013
(73) Patentinhaber: Sick AG, 79183 Waldkirch (DE)
(72) Erfinder: Nübling, Ralf Ulrich, 79211 Denzlingen (DE); Weber, Helmut, 79312 Emmendingen (DE)
(74) Vertreter: Hehl, Ulrich

(56) Entgegenhaltungen:
- EP-A1- 2 280 239
- DE-A1-102005 040 056
- US-A1- 2007 040 034

## Beschreibung

Die Erfindung betrifft einen optoelektronischen Sensor mit einer Zieleinrichtung und ein Verfahren zur Erfassung von Objektinformationen aus einem Erfassungsbereich und zur Visualisierung des Erfassungsbereichs nach dem Oberbegriff von Anspruch 1 beziehungsweise 9.

Optoelektronische Sensoren besitzen einen Erfassungsbereich, auf den sie für ihre Funktion ausgerichtet sein müssen. Wenn der Sensor keinen Visualisierungsmonitor besitzt, ist aber der Erfassungsbereich nur unzureichend zu erkennen. Deshalb werden einige Sensoren mit einer Zieleinrichtung ausgerüstet, die den Erfassungsbereich mit einem Fadenkreuz oder einer ähnlichen lokalisierbaren Leuchtmarkierung sichtbar machen.

Eine besondere Familie von optoelektronischen Sensoren bilden die Codeleser, in deren Erfassungsbereich sich ein Lesefeld befindet. Codes in dem Lesefeld werden erfasst und deren Codeinformation ausgelesen. Es ist unmittelbar einleuchtend, dass hierfür eine Ausrichtung des Codelesers erforderlich ist, damit sich der Code im Lesefeld befindet.

Die verbreitesten Codeleser sind Barcodescanner, welche einen Barcode oder Strichcode mit einem Laserlesestrahl quer zum Code abtasten. Sie werden an Supermarktkassen, zur automatischen Paketidentifikation, Sortierung von Postsendungen oder bei der Gepäckabfertigung in Flughäfen und in anderen Logistikanwendungen häufig eingesetzt. Weitere Anwendungen umfassen Qualitäts- oder Teilekontrollen in Fertigungsprozessen. Ein Barcodescanner markiert sein Lesefeld automatisch, wenn ein Laserstrahl im sichtbaren Spektrum verwendet wird.

Mit der Weiterentwicklung der digitalen Kameratechnologie werden Barcodescanner zunehmend durch kamerabasierte Codeleser abgelöst. Statt Codebereiche abzuscannen, nimmt ein kamerabasierter Codeleser mit Hilfe eines CCD-Chips Bilder der Objekte mit den darauf befindlichen Codes auf. Kamerabasierte Codeleser kommen problemlos auch mit Klarschrift und anderen Codearten als eindimensionalen Strichcodes zurecht, die wie ein Matrixcode auch zweidimensional aufgebaut sind und mehr Informationen zur Verfügung stellen. Für kamerabasierte Codeleser bieten Zieleinrichtungen zur Lesefeld- oder Objektfeldmarkierung eine sehr nützliche Unterstützung.

Eine Zielvorrichtung für eine optoelektronische Lesevorrichtung wird beispielsweise in der US 6 060 722 vorgestellt. Sie basiert auf einer Lichtquelle, die über ein Interferenzmusterelement beispielsweise in Form eines diffraktiven optischen Elements (DOE) verschiedene Zielmuster im Erfassungsbereich erzeugt. Der Wirkungsgrad eines DOE ist aber begrenzt, und zudem sind DOEs nur für einen sehr geringen Wellenlängenbereich geeignet. Auch ist die Herstellung spritzgusstechnisch besonders anspruchsvoll und die Mastererstellung extrem aufwändig

Die DE 10 2005 040 056 A1 beschreibt eine Vorrichtung zum optischen Lesen von Informationen, die einen Markierungsstrahl aussenden kann, welcher ein vorbestimmtes Strahlmuster aufweist, das die Leseposition anzeigt. In einer Ausführungsform ist dazu eine Musterausbildungslinse mit einer Zylinderlinsengruppe vorgesehen, die aus einer Mehrzahl von Zylinderlinsenelementen aufgebaut ist. Diese Zylinderlinsen bilden ein rechteckiges Muster aus L-förmigen Zylinderlinsenanordnungen in den Ecken des Rechtecks und zwei gekreuzten, mittig angeordneten Zylinderlinsen. Dementsprechend ist das erzeugte Strahlmuster ein durch die Ecken und ein zentrales Kreuz dargestelltes Rechteck.

In der EP 2 280 239 A1 wird eine Beleuchtungsvorrichtung für eine stereoskopische 3D-Kamera offenbart. Die Beleuchtungsvorrichtung erzeugt zunächst ein homogenes rechteckiges Leuchtfeld, aus dem dann mit Hilfe eines Mustererzeugungselements in dem Überwachungsbereich der 3D-Kamera ein selbstunähnliches Muster entsteht, um der Szenerie eine von dem 3D-Algorithmus auswertbare Struktur aufzuprägen. Das homogene Leuchtfeld wird von einer Vielzahl in einer Linie angeordneter Lichtquellen mit Hilfe eines Mikrolinsenfeldes erzeugt. Darin stehen eine Reihe von Mikrolinsen leicht verkippt zueinander, die einerseits jeweils eine Beleuchtungslinie erzeugen, andererseits durch die Kippwinkel die Beleuchtungslinien gegeneinander versetzen und so zu dem Leuchtfeld aufziehen.

Zielvorrichtungen sind auch aus ganz anderen technischen Bereichen bekannt. In der US 2002 0012898 A1 oder der US 6 997 716 B2 wird ein Laserfadenkreuz erzeugt, um im Rahmen einer Computersimulation automatisch den Ort zu erfassen, auf den eine Waffe gerichtet ist. Dazu wird das Laserlicht dort detektiert, wo es auftrifft. Soweit nicht ohnehin unsichtbares IR-Licht verwendet wird, ist eine Visualisierung jedenfalls nur ein Nebeneffekt, da der eigentliche Zweck des Laserfadenkreuzes die automatische Erfassung des virtuellen Einschusspunkts ist.

Es ist daher Aufgabe der Erfindung, das Erfassungsfeld eines optoelektronischen Sensors auf verbesserte Weise zu markieren.

Diese Aufgabe wird durch einen optoelektronischen Sensor mit einer Zieleinrichtung gemäß Anspruch 1 und ein Verfahren zur Erfassung von Objektinformationen aus einem Erfassungsbereich und zur Visualisierung des Erfassungsbereichs gemäß Anspruch 9 gelöst. Dabei geht die Lösung von der Grundidee aus, das Lichtmuster refraktiv zu erzeugen. Dazu werden mehrere Zylinderlinsen eingesetzt, die das Licht der Lichtquelle der Zieleinrichtung auf mehrere Linien bündeln. Aus den mehreren Linien kann die Lage des Erfassungsbereichs abgeleitet werden, beispielsweise indem die Linien sich im Zentrum des Erfassungsbereichs kreuzen, indem die Linien das Zentrum des Erfassungsbereichs oder den Erfassungsbereich selbst umranden oder indem die Linien Ecken eines Mittenbereichs oder des gesamten Erfassungsbereichs markieren.

Anstelle nur einer Lichtquelle kann auch eine Mehrzahl von Lichtquellen eingesetzt werden, um eine höhere optische Ausgangsleistung zu erzielen, beziehungsweise um das Mustererzeugungselement an mehreren Stellen für ein gewünschtes, insbesondere homogenes oder im Randbereich etwas überhöhtes Beleuchtungsprofil auszuleuchten.

Die Erfindung hat den Vorteil, dass die Zieleinrichtung sehr kostengünstig ist und zugleich die Erzeugung einer Vielzahl von Lichtmustern entsprechend den Anforderungen der Anwendung ermöglicht. Die Zieleinrichtung benötigt zudem in sich keine Justage und funktioniert, solange die optische Achse der Lichtquelle hinreichend auf die optische Achse des Lichtempfängers ausgerichtet ist. Gegenüber einem DOE sind die Anforderungen an die Lichtquelle deutlich geringer, da bei Refraktion durch reine Umverteilung so gut wie keine optische Ausgangsleistung verloren geht und der erforderliche Lichtwellenlängenbereich praktisch nicht beschränkt ist.

Der Sensor ist bevorzugt ein Codeleser, dessen Auswertungseinheit dafür ausgebildet ist, aus dem elektrischen Signal Informationen über Codebereiche in dem Erfassungsbereich zu gewinnen und Codeinformationen aus den Codebereichen auszulesen. Der Erfassungsbereich umfasst in diesem Fall das Lesefeld, in dem zu lesende Codes erkannt und decodiert werden können. Sowohl für Codeleser im Handbetrieb wie auch für Codeleser in fixer Montage, etwa an einem Förderband oder in einem Lesetunnel ist es wichtig zu wissen, wo sich der Lesebereich befindet. Der Codeleser ist noch bevorzugter ein kamerabasierter Codeleser, dessen Lichtempfänger ein matrix- oder zeilenförmiger Bildsensor ist. Damit können nicht nur eindimensionale, sondern auch zweidimensionale Codes mittels Bildverarbeitung decodiert werden.

Die Zylinderlinsen sind bevorzugt zueinander in unterschiedlichen Richtungen orientiert, so dass die Linien in dem erzeugten Lichtmuster in einem Winkel zueinander stehen. Die Zylinderlinsen sind also gegenseitig in einer Ebene senkrecht zur optischen Achse der Lichtquelle verdreht, so dass ihre Brennlinien und damit auch die Linien des Lichtmusters im Erfassungsbereich sich kreuzen. Insbesondere sind die Zylinderlinsen zueinander senkrecht ausgerichtet derart, dass im Erfassungsbereich sich rechtwinklig kreuzende Linien entstehen. Durch solche Linien können bestimmte Punkte im Erfassungsbereich genau markiert werden.

Das Mustererzeugungselement weist bevorzugt ein Mikrolinsenfeld auf. Dadurch steht eine Vielzahl von Mikrozylinderlinsen zur Verfügung, mit denen ein gewünschtes Lichtmuster aus einigen oder auch zahlreichen Linien in verschiedensten Konfigurationen erzeugt werden kann. Es ist auch denkbar, mehrere Mikrolinsenfelder vorzusehen. Diese bilden dann entweder direkt aneinandergrenzend ein größeres Mikrolinsenfeld oder eine Anordnung von mehreren vereinzelten Mikrolinsenfeldern. Im letzteren Fall weist dann jedes Mikrolinsenfeld eine eigene Lichtquelle auf. Aber auch für ein einziges oder ein größeres zusammengesetztes Mikrolinsenfeld kann die Verwendung mehrerer Lichtquellen vorteilhaft sein, um eine lichtstärkere Ausleuchtung beziehungsweise ein gewünschtes Beleuchtungsprofil zu erhalten.

Die Zylinderlinsen oder, im Falle eines Mikrolinsenfeldes, die Mikrozylinderlinsen weisen bevorzugt gruppenweise dieselbe Orientierung, Gruppen untereinander aber unterschiedliche Orientierungen auf, so dass jeweils eine Gruppe eine Linie mit unterschiedlicher Orientierung in dem Erfassungsbereich erzeugt. Wenn beispielsweise eine horizontale und eine vertikale Gruppe vorgesehen ist, entsteht ein Fadenkreuz oder etwas verallgemeinert ein rechter Eckwinkel. Weicht die Orientierung von der Horizontalen und Vertikalen ab, so rotiert das entstehende Muster. Durch Abweichung in nur einer Gruppe wird der eingeschlossene Winkel variiert. Die Gruppen können als regelmäßiges Muster auf dem Mikrolinsenfeld gebildet werden, bei dem sich beispielsweise horizontale und vertikale Orientierungen abwechseln. Damit wird das Mikrolinsenfeld übersichtlicher. Die gleiche Wirkung in Bezug auf das Lichtmuster lässt sich aber auch mit unregelmäßigeren Anordnungen der Gruppen erzielen. Durch eine größere Anzahl von Gruppen wird auch die Anzahl von Linien in dem Lichtmuster erhöht.

Das Mikrolinsenfeld weist bevorzugt auch nicht zylindrische Linsen auf. Beispielsweise haben die Zylinderlinsen asphärische Anteile, oder es sind Sammellinsen zur Erzeugung von Lichtpunkten vorgesehen. Dadurch werden weitere Freiheitsgrade für die Gestaltung des Lichtmusters eröffnet.

Die Mikrolinsen weisen bevorzugt untereinander unterschiedliche Brennweiten oder Größen auf. Auch damit können weitere Eigenschaften des Lichtmusters beeinflusst und verändert werden.

Mindestens eine Linse des Mikrolinsenfelds ist bevorzugt gegenüber der Ebene des Mikrolinsenfeldes in einem Kippwinkel orientiert oder keilförmig ausgebildet. Dadurch ist effektiv die optische Achse dieser Linse gegenüber derjenigen des Lichtempfängers verkippt, so dass sich der erreichbare zweidimensionale Bereich des Lichtmuster innerhalb des Erfassungsbereichs vergrößert.

Das Mikrolinsenfeld ist bevorzugt in eine Optik der Lichtquelle, eine Optik eines Lichtsenders zum Beleuchten des Erfassungsbereichs oder eine Frontscheibe des Sensors integriert. Es wird so kein zusätzliches Bauteil benötigt, und auch eine eigene Justierung entfällt. Das Mustererzeugungselement kann direkt auf die Optik oder die Frontscheibe aufgebracht werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines optoelektronischen Sensors mit einer Zieleinrichtung;
- Fig. 2: eine dreidimensionale Ansicht einer einstückigen gekreuzten Zylinderlinse; und
- Fig. 3a-c: verschiedene Gruppenkonfigurationen von unterschiedlich orientierten Mikrozylinderlinsen und ein jeweiliges damit erzeugtes Lichtmuster; und
- Fig. 4a-b: alternative Gruppenkonfigurationen zur Erzeugung der Lichtmuster gemäß den Figuren 3a-c.

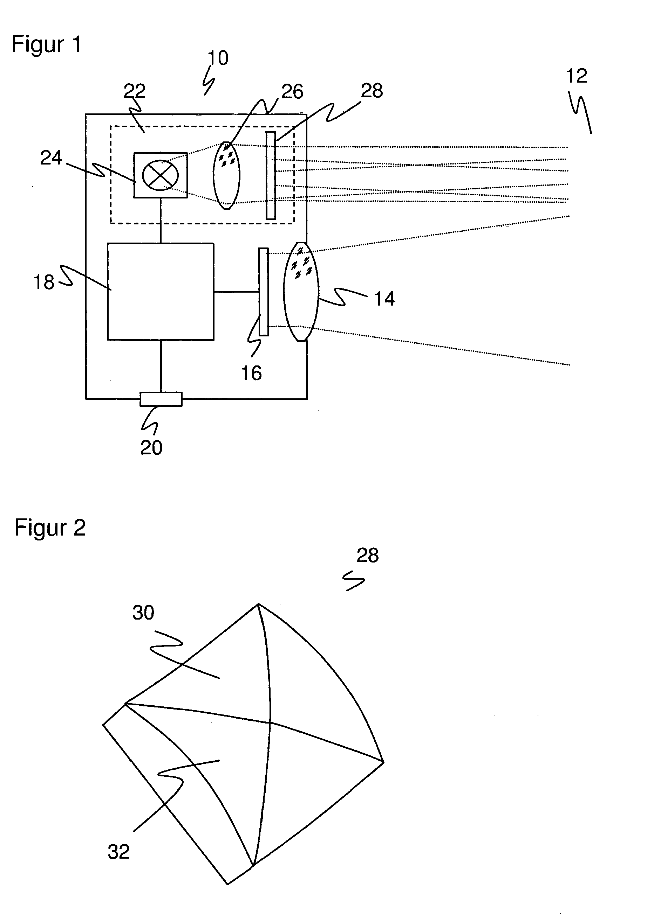

Figur 1 zeigt eine schematische Schnittdarstellung eines optoelektronischen Sensors 10. Der Sensor ist beispielsweise ein kamerabasierter Codeleser, kann aber ebenso ein anderer optoelektronischer Sensor 10 sein, dessen Erfassungsbereich ausgerichtet werden soll und deshalb von einer Visualisierung mittels einer Zieleinrichtung profitiert.

Der Sensor 10 empfängt Licht aus einem Erfassungsbereich 12. Im Falle eines Codelesers können sich dort beispielsweise Objekte mit zu lesenden Codes befinden. Das Licht aus dem Aufnahmebereich 12 wird durch ein Aufnahmeobjektiv oder eine Empfangsoptik empfangen, die vereinfacht durch eine Linse 14 dargestellt ist. Ein Lichtempfänger 16 wandelt das Empfangslicht in ein elektrisches Signal. Bei dem Lichtempfänger handelt es sich beispielsweise um eine Photodiode oder, wie bei einem kamerabasierten Codeleser, um einen CCD- oder CMOS-Chip mit einer Vielzahl von zu einer Zeile oder einer Matrix angeordneten Pixelelementen.

Das elektrische Signal wird einer Auswertungseinheit 18 zugeführt, die daraus Objektinformationen des Erfassungsbereichs 12 gewinnt. Im Beispiel des Codelesers enthält das elektrische Signal Bilddaten aus einem Lesefeld in dem Erfassungsbereich 12. In diesen Bilddaten werden Codebereiche gesucht, und die Codeinformationen innerhalb von Codebereichen werden decodiert. Das Ergebnis der Auswertung wird an einem Ausgang 20 bereitgestellt. In einer alternativen, nicht dargestellten Ausführungsform werden Rohdaten in unterschiedlichen Vorverarbeitungsstadien ausgegeben und die gesamte Auswertung oder ein Teil der Auswertung nach extern verlagert.

Der Sensor 10 umfasst weiterhin eine Zieleinrichtung 22 mit einer Lichtquelle 24, etwa einer Halbleiterlichtquelle wie eine LED, eine Laserdiode oder ein VCSEL im sichtbaren Spektrum, mit einer optionalen Optik 26 zur Kollimierung und mit einem Mustererzeugungselement 28. In dem Erfassungsbereich 12 wird damit ein Lichtmuster erzeugt, um die Lage des Erfassungsbereichs 12 sichtbar zu machen und somit den Sensor 10 auf einen gewünschten Erfassungsbereich 12 richten zu können.

Zusätzlich kann der Sensor 10 eine weitere, nicht dargestellte aktive Beleuchtung aufweisen. Damit werden beispielsweise Codes zur verbesserten Lesbarkeit ausgeleuchtet.

Figur 2 zeigt eine erste Ausführungsform des Mustererzeugungselements 28 als dreidimensionale Kontur. Die Lichtquelle 24 ist mit Hilfe der Optik 26 auf den Zielabstand fokussiert. Das Mustererzeugungselement weist zwei Zylinderlinsen 30, 32 auf, deren Brennlinien zueinander senkrecht orientiert sind. Anstelle zweier separater Zylinderlinsen 30, 32 wird ein einstückiges Mustererzeugungselement 28 ausgebildet, in das durch seine Formgebung zwei gekreuzte Zylinderlinsen 30, 32 integriert sind. Jede der beiden Zylinderlinsen 30, 32 erzeugt jeweils eine Linie in dem Erfassungsbereich 12. Durch die gekreuzte Anordnung beider Zylinderlinsen 30, 32 entsteht aus den Linien in dem Erfassungsbereich 12 ein Fadenkreuz.

Die Zylinderlinsen 30, 32 in dem Mustererzeugungselement 28 können klassische Linsen oder Fresnellinsen, konkav oder konvex sein. Eine zusätzliche Blende oder eine Verkippung zur Ausrichtung gegenüber der optischen Achse des Lichtempfängers 16 in einem bestimmten Zielabstand ist denkbar.

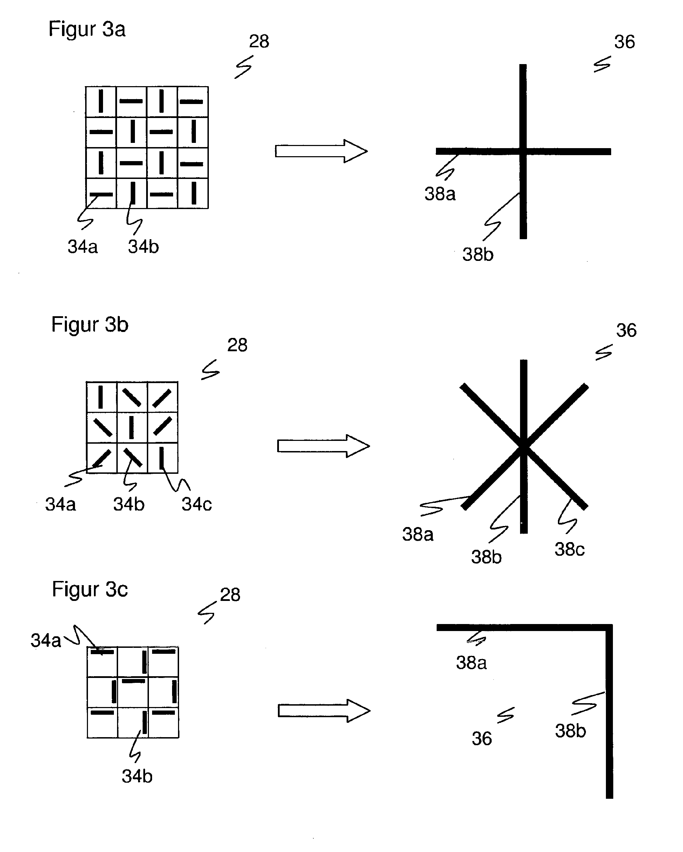

Die Figuren 3a-c zeigen weitere Ausführungsformen von Mustererzeugungselementen 28. Gemeinsam ist diesen Ausführungsformen, dass das Mustererzeugungselement 28 ein Mikrolinsenfeld mit einer Vielzahl von Mikrozylinderlinsen 34 aufweist. Das Raster beziehungsweise die Größe und der gegenseitige Abstand (Pitch) der Mikrozylinderlinsen liegt im Bereich von etwa einem Zehntelmillimeter bis hin zu mehreren Millimetern, beispielsweise in einem Bereich von 0,5 mm bis 3 mm. Weiterhin erfolgt die Mustererzeugung refraktiv an den einzelnen Mikrozylinderlinsen 34. Der Strahldurchmesser der Beleuchtung von der Lichtquelle 24 ist größer als das Raster, so dass mehrere oder alle Mikrozylinderlinsen 34 im Strahlengang stehen. Abweichend von den Darstellungen können die Elemente statt quadratisch auch andere Formen aufweisen, etwa rechteckig, hexagonal oder dergleichen.

Die Mikrozylinderlinsen 34 werden gruppenweise in mindestens zwei Gruppen ausgerichtet. Innerhalb der Gruppe sind die Mikrozylinderlinsen 34 gleich orientiert, die Gruppen weisen aber gegenseitig unterschiedliche Orientierungen auf. Dadurch entstehen Mehrfachlinien in diversen Mustern, von denen die Figuren 3a-c beispielhaft einige illustrieren.

Figur 3a zeigt im linken Teil ein Beispiel mit zwei Gruppen von Mikrozylinderlinsen 34ab, die abwechselnd schachbrettartig um 90° gegeneinander verkippt sind. Dabei steht die optische Achse der Lichtquelle 24 in der Darstellung senkrecht zur Papierebene. Beide Gruppen von Mikrozylinderlinsen 34a-b erzeugen in dem rechts in Figur 3a gezeigten entstehenden Lichtmuster 36 jeweils eine Linie 38a-b, die gemeinsam ein Kreuz bilden. Im Zentrum des Lichtmusters 36 gibt es eine Energieüberhöhung, weil sich hier Licht aus beiden Gruppen von Mikrozylinderlinsen 34a-b überlagert.

Figur 3b zeigt ganz entsprechend ein Beispiel mit drei Gruppen von Mikrozylinderlinsen 34a-c, die zu einem Lichtmuster 36 aus drei sich kreuzenden Linien 38a-c führen. Die Anordnung Mikrozylinderlinsen 34a-c innerhalb des Mikrolinsenfeldes kann wie dargestellt möglichst regelmäßig erfolgen. Zumindest solange die Dimensionen der Mikrozylinderlinsen 34a-c klein gegenüber der Strahlbreite sind, spielt diese Anordnung kaum eine Rolle und kann fast beliebig verändert werden.

Figur 3c zeigt ein weiteres Beispiel mit zwei Gruppen von Mikrozylinderlinsen 34a-b, die innerhalb des Rasters des Mikrolinsenfelds nicht zentriert beziehungsweise gekeilt sind. Deshalb entsteht zwar eine Überkreuzung der entstehenden Linien 38a-b in dem Lichtmuster 36, jedoch ebenfalls nicht zentriert. In diesem Fall ist die Abweichung von einer zentrierten Überkreuzung sogar extrem, dass der Schnittpunkt der Linien 38a-b in einer Ecke liegt und das Lichtmuster 36 somit einen Eckwinkel bildet.

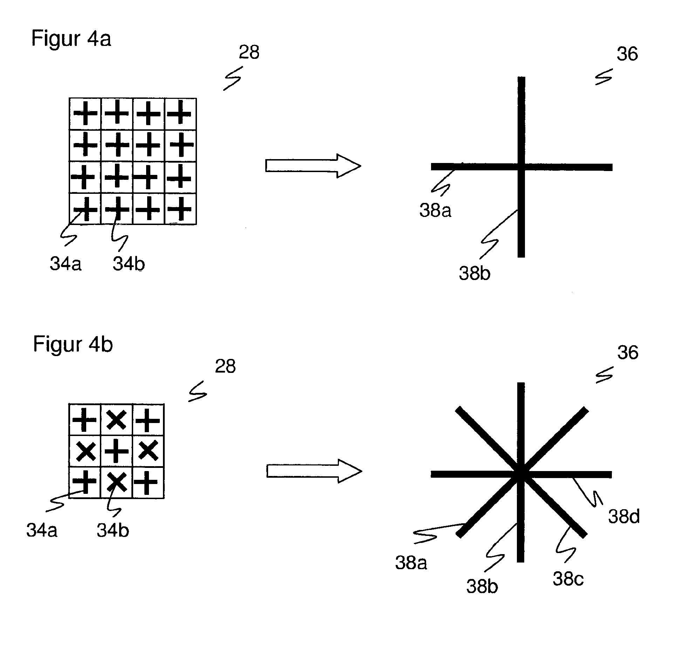

Die Figuren 4a und 4b zeigen alternative Beispiele von Gruppen von Mikrozylinderlinsen 34a-b. Im Unterschied zu den Beispielen der Figuren 3a-c sind hier die Mikrozylinderlinsen in sich schon für eine Brechung in zwei Achsen ausgelegt, ähnlich dem in Figur 2 gezeigten Mustererzeugungselement 28, in das durch seine Formgebung zwei Zylinderlinsen 30, 32 integriert sind. Das jeweils resultierende Lichtmuster 36 ist ebenfalls gezeigt. Es handelt sich bei der gleichmäßigen Anordnung der Mikrozylinderlinsen 34a-b gemäß Figur 4a um ein einfaches Kreuz, im Falle der abwechselnden Anordnung der Mikrozylinderlinsen 34a-b gemäß Figur 4b um ein verdrehtes Doppelkreuz, bei dem zu den Linien der Figur 3b eine zusätzliche Mittellinie 38d hinzutritt.

Die Konstellationen in den Figuren 3 und 4 sind nur einige Beispiele aus einer Vielzahl von Orientierungen und Anordnungen, mit denen Mikrozylinderlinsen 34 ein Lichtmuster 36 aus mehreren Linien 38 erzeugen können. Es sind aber auch noch weitere Variationen möglich. So können die Mikrozylinderlinsen 34 klassisch oder als Fresnellinsen ausgebildet sein. Das Mikrolinsenarray kann als Ganzes verkippt sein, oder es sind nur einzelne Mikrolinsen 34 verkippt oder mit einem Keilelement versehen. Solche Kipp- oder Keilwirkungen können zur Strahlablenkung genutzt werden, wodurch eine Verteilung in großflächigere zweidimensionale Muster auch ohne Kreuzung der einzelnen Linien 38 erreichbar ist.

Komplexere Strukturen des Lichtmusters 36 sind durch weitere Freiheitsgrade erzeugbar. Neben den Mikrozylinderlinsen 34 sind auch nicht zylindrische Elemente denkbar, etwa um eine Kollimation auf einzelne Lichtpunkte zu erzeugen. Die einzelnen Mikrolinsen können nicht nur unterschiedliche Orientierungen, sondern auch unterschiedliche Brennweiten, Größen, Neigungen oder Konturen mit beispielsweise asphärischen Anteilen haben. Es können zusätzliche Lichtquellen vorgesehen sein, um das Mikrolinsenfeld ausreichend zu durchleuchten. Denkbar ist auch, mehrere Mikrolinsenfelder oder Teilbereiche von Mikrolinsenfeldern mit jeweils einer eigenen Lichtquelle zu durchstrahlen, so dass mehrere Lichtmuster 36 in unterschiedlichen Regionen des Erfassungsbereichs 12 entstehen. So werden beispielsweise mehrere Ecken eines gewählten Mittenbereichs oder des Erfassungsbereichs 12 selbst markiert.

In einer weiteren bevorzugten Ausführungsform ist das Mustererzeugungselement 28 kein eigenes Element, sondern das Mikrolinsenarray wird direkt auf der Kollimatorlinse 26, einer Sendeoptik eines zusätzlichen Lichtsenders des Sensors 10 oder einer Frontscheibe des Sensors 10 aufgebracht.

Durch die Durchstrahlung vieler Mikrolinsen wird das Mustererzeugungselement sehr lageunempfindlich. Deshalb sind keine besonderen Maßnahmen zur Justage erforderlich. Wegen der hohen Anzahl einzelner Mikrolinsen lässt der Laserschutz eine höhere Sendeleistung der Zieleinrichtung 22 zu, und dies führt zu einer verbesserten Sichtbarkeit der Lichtmusters 36.

## Patentansprüche

1. Optoelektronischer Sensor (10) mit einem Lichtempfänger (16) zur Umwandlung von Empfangslicht aus einem Erfassungsbereich (12) in ein elektrisches Signal, mit einer Auswertungseinheit (18) zur Gewinnung von Informationen über Objekte in dem Erfassungsbereich (12) aus dem elektrischen Signal und mit einer Zieleinrichtung (22), die mindestens eine Lichtquelle (24) und ein Mustererzeugungselement (28) umfasst, um den Erfassungsbereich (12) durch ein Lichtmuster (36) sichtbar zu machen, wobei das Mustererzeugungselement (28) mehrere Zylinderlinsen (30, 32, 34) umfasst, so dass das erzeugte Lichtmuster (36) mehrere Linien (38) aufweist, aus denen die Lage des Erfassungsbereichs (12) ableitbar ist,
**dadurch gekennzeichnet,**
**dass** das Mustererzeugungselement (28) ein Mikrolinsenfeld mit einer Vielzahl von Mikrozylinderlinsen (34) aufweist.

2. Sensor (10) nach Anspruch 1,
der ein Codeleser ist, dessen Auswertungseinheit (18) dafür ausgebildet ist, aus dem elektrischen Signal Informationen über Codebereiche in dem Erfassungsbereich (12) zu gewinnen und Codeinformationen aus den Codebereichen auszulesen, wobei der Codeleser insbesondere ein kamerabasierter Codeleser ist, dessen Lichtempfänger (16) ein matrix- oder zeilenförmiger Bildsensor ist.

3. Sensor (10) nach einem der vorhergehenden Ansprüche,
wobei die Zylinderlinsen (30, 32, 34) zueinander in unterschiedlichen Richtungen orientiert sind, so dass die Linien (38) in dem erzeugten Lichtmuster (36) in einem Winkel zueinander stehen.

4. Sensor (10) nach einem der vorhergehenden Ansprüche,
wobei die Zylinderlinsen (30, 32, 34) gruppenweise dieselbe Orientierung aufweisen, Gruppen untereinander aber unterschiedliche Orientierungen, so dass jeweils eine Gruppe eine Linie (38) mit unterschiedlicher Orientierung in dem Erfassungsbereich (12) erzeugt.

5. Sensor (10) nach einem der vorhergehenden Ansprüche,
wobei das Mikrolinsenfeld auch nicht zylindrische Linsen aufweist.

6. Sensor (10) nach einem der vorhergehenden Ansprüche,
wobei die Mikrolinsen (34) untereinander unterschiedliche Brennweiten oder Größen aufweisen.

7. Sensor (10) nach einem der vorhergehenden Ansprüche,
wobei mindestens eine Linse (34) des Mikrolinsenfelds (28) gegenüber der Ebene des Mikrolinsenfeldes (28) in einem Kippwinkel orientiert oder keilförmig ausgebildet ist.

8. Sensor (10) nach einem der vorhergehenden Ansprüche,
wobei das Mikrolinsenfeld (28) in eine Optik (26) der Lichtquelle, eine Optik eines Lichtsenders zum Beleuchten des Erfassungsbereichs (12) oder eine Frontscheibe des Sensors (10) integriert ist.

9. Verfahren zur Erfassung von Objektinformationen aus einem Erfassungsbereich (12) und zur Visualisierung des Erfassungsbereichs (12), bei dem ein Lichtempfänger (16) Empfangslicht aus dem Erfassungsbereich (12) in ein elektrisches Signal umwandelt, das zur Gewinnung der Objektinformationen ausgewertet wird, und wobei in dem Erfassungsbereich (12) ein Lichtmuster (36) erzeugt wird, um den Erfassungsbereich (12) sichtbar zu machen, wobei das Lichtmuster (36) entsteht, indem mit mehreren Zylinderlinsen (30, 32, 34) mehrere Linien (38) erzeugt werden, aus denen die Lage des Erfassungsbereichs (12) ableitbar ist,
**dadurch gekennzeichnet,**
**dass** das Lichtmuster (36) an einem Mikrolinsenfeld (28) mit einer Vielzahl von Mikrozylinderlinsen (34) entsteht.

## Claims

1. An optoelectronic sensor (10) having a light receiver (16) for converting received light from a detection area (12) into an electrical signal, the sensor (10) comprising an evaluation unit (18) for obtaining information about objects in the detection area (12) from the electrical signal and aiming means (22) having at least one light source (24) and a pattern generating element (28) to make the detection area (12) visible with a light pattern (36), wherein the pattern generating element (28) comprises a plurality of cylindrical lenses (30, 32, 34) so that the generated light pattern (36) comprises a plurality of lines (38) showing the position of the detection area (12)
**characterized in that**
the pattern generating element (28) comprises a micro lens array having a plurality of micro cylindrical lenses (34).

2. The sensor (10) according to claim 1,
the sensor (10) being a code reader whose evaluation unit (18) is configured to obtain information about code areas in the detection area (12) from the electrical signal and to read code information from the code areas, wherein the code reader in particular is a camera-based code reader whose light receiver (16) is a matrix-shaped or a line-shaped image sensor.

3. The sensor (10) according to any of the preceding claims,
wherein the cylindrical lenses (30, 32, 34) are oriented with respect to one another in different directions so that the lines (38) in the generated light pattern (36) are oriented with respect to one another at an angle.

4. The sensor (10) according to any of the preceding claims,
wherein the cylindrical lenses (30, 32, 34) have the same orientation within a group, whereas different groups of cylindrical lenses (30, 32, 34) have different orientation, so that each group generates a line (38) of different orientation within the detection area (12).

5. The sensor (10) according to any of the preceding claims,
wherein the micro lens array also comprises non-cylindrical lenses.

6. The sensor (10) according to any of the preceding claims,
wherein the micro lenses (34) have different focal lengths or sizes among one another.

7. The sensor (10) according to any of the preceding claims,
wherein at least one micro lens (34) of the micro lens array (28) is oriented at a tilt angle with respect to a plane of the micro lens array (28), or is wedge-shaped.

8. The sensor (10) according to any of the preceding claims,
wherein the micro lens array (28) is integrated into optics of the light source (24), into optics of a light transmitter for illuminating the detection area (12), or into a front screen of the sensor (10).

9. A method for detecting object information from a detection area (12) and for visualizing the detection area (12), wherein a light receiver (16) converts received light from the detection area (12) into an electrical signal which is evaluated to obtain the object information, and wherein a light pattern (36) is generated in the detection area (12) to make the detection area (12) visible, wherein the light pattern (36) is generated as a plurality of lines (38) by means of a plurality of cylindrical lenses (30, 32, 34), the position of the detection area (12) being shown by the lines (38),
**characterized in that**
the light pattern (36) is generated at a micro lens array (28) having a plurality of micro cylindrical lenses (34).

## Revendications

1. Capteur optoélectronique (10) comprenant un récepteur de lumière (16) pour convertir une lumière reçue depuis une zone de détection (12) en un signal électrique, comprenant une unité d'évaluation (18) pour obtenir des informations sur des objets dans la zone de détection (12) à partir du signal électrique, et comprenant un moyen de ciblage (22), qui inclut au moins une source de lumière (24) et un élément de génération de motif (28), afin de rendre visible la zone de détection (12) par un motif lumineux (36), dans lequel l'élément de génération de motif (28) inclut plusieurs lentilles cylindriques (30, 32, 34), de sorte que le motif lumineux engendré (36) comprend plusieurs lignes (38) à partir desquelles il est possible de dériver la situation de la zone de détection (12),
**caractérisé en ce que**
l'élément de génération de motif (28) comprend un champ de microlentilles avec une pluralité de microlentilles cylindriques (34).

2. Capteur (10) selon la revendication 1, qui est un lecteur de code, dont l'unité d'évaluation (18) est réalisée pour obtenir, à partir du signal électrique, des informations sur des zones codées dans la zone de détection (12) et pour lire des informations codées à partir des zones codées, dans lequel le lecteur de code est en particulier un lecteur de code basé sur une caméra dont le récepteur de lumière (16) est un capteur d'image en forme de matrice ou en forme de ligne.

3. Capteur (10) selon l'une des revendications précédentes, dans lequel les lentilles cylindriques (30, 32, 34) sont orientées dans différentes directions les unes par rapport aux autres, de sorte que les lignes (38) forment un angle les unes par rapport aux autres dans le motif lumineux généré (36).

4. Capteur (10) selon l'une des revendications précédentes, dans lequel les lentilles cylindriques (30, 32, 34) présentent par groupe la même orientation, mais les groupes présentent les uns par rapport aux autres des orientations différentes, de sorte qu'un groupe respectif engendre une ligne (38) avec orientation différente dans la zone de détection (12).

5. Capteur (10) selon l'une des revendications précédentes, dans lequel le champ de microlentilles comprend également des lentilles non cylindriques.

6. Capteur (10) selon l'une des revendications précédentes, dans lequel les microlentilles (34) présentent les unes par rapport aux autres des distances focales différentes ou des tailles différentes.

7. Capteur (10) selon l'une des revendications précédentes, dans lequel au moins une lentille (34) du champ de microlentilles (28) est réalisée orientée à un angle de basculement par rapport au plan du champ de microlentilles (28), ou en forme de coin.

8. Capteur (10) selon l'une des revendications précédentes, dans lequel le champ de microlentilles (28) est intégré dans un système optique (26) de la source de lumière, un système optique d'un émetteur de lumière pour éclairer la zone de détection (12) ou une vitre frontale du capteur (10).

9. Procédé pour la détection d'information sur les objets depuis une zone de détection (12) et pour visualiser la zone de détection (12), dans lequel un récepteur de lumière (16) convertit la lumière reçue depuis la zone de détection (12) en un signal électrique qui est évalué pour obtenir les informations sur des objets, et dans lequel on engendre un motif lumineux (36) dans la zone de détection (12), afin de rendre visible la zone de détection (12), et le motif lumineux (36) est produit en ce que l'on engendre avec plusieurs lentilles cylindriques (30, 32, 34) plusieurs lignes (38) à partir desquelles on peut dériver la situation de la zone de détection (12),
**caractérisé en ce que**
le motif lumineux (36) est produit au niveau d'un champ de microlentilles (28) avec une pluralité de microlentilles cylindriques (34).
